# EUROPEAN PATENT SPECIFICATION

(11) **EP 1 634 262 B1**
(45) Date of publication and mention of the grant of the patent: **17.01.2018**
(21) Application number: 04742905.5
(22) Date of filing: 10.06.2004
(51) Int. Cl.: G08B 21/02, G01S 5/02

(54) **ACTIVATION MECHANISM FOR A PERSONAL LOCATOR BEACON**
ANTRIEBSMECHANISMUS FÜR EINE BAKE ZUR PERSONENAUFENTHALTSBESTIMMUNG
MECANISME D'ACTIVATION POUR UNE RADIOBALISE INDIVIDUELLE DE REPERAGE

(30) Priority: 13.06.2003 GB 0313649
(43) Date of publication of application: 15.03.2006
(73) Proprietor: Orolia Limited, Portsmouth PO3 5PB (GB)
(72) Inventor: CLAYTON, Brian, Signature Industries Limited, London SE28 0BH (GB)
(74) Representative: Appleyard Lees IP LLP
(86) International application number: PCT/GB2004/002464
(87) International publication number: WO 2004/111964

(56) References cited:
- GB-A- 2 136 737
- US-A- 5 512 881
- US-A- 5 894 285
- US-A- 5 903 219
- US-B1- 6 185 410
- US-B1- 6 208 269
- US-B1- 6 260 508

## Description

The invention relates to an activation mechanism for a personal locator beacon.

Personal locator beacons are devices designed to alert the rescue authorities of an emergency situation. For instance, military flying personnel are equipped with such locator beacons to aid in their location following aircraft ejection.

Previously, personal locator beacons were activated manually by a user following an emergency situation. However it will be evident that in some situations, manual activation may be inconvenient or impossible. For instance, in the event of a necessary aircraft ejection aircrew may be rendered unconscious and unable to manually activate their location beacons.

US6,260,508 discloses a position indicator device for marking the location of an aircraft that has crashed has a buoyant housing containing a radio beacon, a dye dispenser, and a visual beacon. Upon the crash of the aircraft, the buoyant housing is deployed by an air bag ejection system.

US6,185,410 discloses a method for remotely activating a controller through a user's tactile sensation.

US5,512,881 discloses an alarm apparatus which generates a repetitive sound wave having at least two pulses of predetermined frequencies within a predetermined interval of time.

US5,903,219 discloses a personal security device having a box holding a circuit board, a siren, a first jack, a battery holder, a second jack, a switch and a lamp, a control plug for connecting to the first jack to turn off the siren.

It is an aim of embodiments of the present invention (which is defined by the claims) to provide a personal locator beacon activation mechanism which overcomes the abovementioned disadvantages.

According to a first aspect of the invention, there is provided an activation mechanism for a personal locator beacon which beacon is arranged, in use, to be located on a member of an aircrew, the activation mechanism comprising: a removable actuator pin arranged, in use, to be connected by a leash to a fixed point of an aircraft; a pin housing fixedly attached to the personal locator beacon for removably associating the pin with the locator beacon; and a pin withdrawal mechanism for automatically disassociating the pin from the locator beacon in the event of an emergency ejection of an aircrew member, withdrawal of the pin causing activation of the personal locator beacon.

Preferably, the removable actuator pin and the pin housing are arranged to cooperate with one another by means of mutually engaging members. Preferably, the mutually engaging members form a detent mechanism. Preferably, the detent mechanism comprises a protrusion cooperating with an indentation. Preferably, the protrusion and indentation comprise cooperating parts of the housing and the pin respectively.

Preferably, the activation mechanism is arranged such that the housing may be oriented on the personal locator beacon in one of a plurality of positions according to a desired pin entry/exit angle. Preferably, the housing may be oriented with respect to the beacon such that the pin may be withdrawn from the housing in a sideways direction. Alternatively, the housing may be oriented with respect to the beacon such that the pin may be withdrawn at an angle approximately orthogonal to the sideways direction.

Variable orientation is preferably provided to account for the variety of possible positions on a flight suit on which the beacon may be worn, so as to ensure that wherever it is preferred to wear the beacon a smooth removal of the pin may be ensured.

Preferably, the pin is slidably engageable with the housing. Preferably, the housing comprises a pin insertion region and a pin reception region into which the pin may be slidably introduced and positively locked into position by means of the detent mechanism.

Preferably, the detent mechanism comprises a flexible finger forming part of the housing and including a protrusion for engaging with a corresponding indentation in the pin.

Preferably, insertion of the pin into the insertion region of the housing causes deflection of the finger and, further insertion of the pin allows the protrusion on the finger to seat within the indentation of the pin.

Preferably, the pin includes a deflection ramp which is inclined with respect to a sliding plane of insertion of the pin, whereby insertion of the pin into the insertion region of the housing causes the deflection ramp to connect with the housing finger and cause deflection of the finger.

Preferably, means are provided on the housing or the pin or a body portion of the beacon itself to prevent mis-insertion of the pin into the housing. Such means preferably comprises suitably arranging the geometry of the pin and housing so as to only enable insertion of the pin from a desired side of the housing. For instance, a shoulder may be provided internally of the housing to prevent the pin from being inserted into the insertion region from the wrong direction.

Preferably, the indentation formed in the pin comprises a V-shaped groove whose formation is arranged to correspond closely to the formation of the finger protrusion.

Preferably, once inserted into the housing, the cooperation of indentation and protrusion is arranged to resist removal of the pin from the housing.

Preferably, the geometric configuration of the indentation and protrusion is selected according to a desired resistance to withdrawal of the pin. Here, variation of one or more of the depth of protrusion/ indentation, angular configuration of the protrusion/indentation, thickness of finger and material properties of the finger may be made to alter the desired resistance.

Choosing an appropriate resistance to withdrawal of the pin is important to allow for a variety of aircrew weights and sizes, more resistance being required for heavier aircrew.

Preferably, the pin is provided with engagement means for cooperation with the pin withdrawal mechanism. The engagement means may comprise a through bore formed in an extension of the pin which is arranged to extend beyond an outer periphery of the housing when the pin is received within the housing. Preferably, the pin withdrawal mechanism comprises a key ring or like mechanism which is arranged to extend through the bore formed in the pin and to be joined to an external surface.

Preferably, the pin is arranged to be connected by means of a leash to a fixed point and, movement of the personal locator beacon away from the fixed point, beyond an extent of the leash causes the pin to be pulled away from the housing.

Preferably, the personal locator beacon is arranged to form part of the equipment of aircrew and the pin is arranged to be attached by leash to part of an aircraft, such that, ejection of the pilot from the aircraft causes the pin to disengage from the housing.

It is preferable that the pin should not be disturbed from the housing accidentally and, for this reason, the detent mechanism retaining the pin within the housing is preferably arranged to resist inadvertent removal of the pin. The degree of ease of removal of the pin from the housing is preferably dependent upon the profile of both the protrusion and the corresponding indentation forming the detent means.

Preferably, removal of the pin from the housing causes activation of the personnel locator beacon.

For a better understanding of the invention, and to show how embodiments of the same may be carried into effect, reference will now be made, by way of example, to the accompanying diagrammatic drawings in which:
Figure 1 is a schematic perspective view of an activation mechanism in accordance with embodiments of the present invention;
Figure 2 is a schematic perspective view showing a personal locator beacon and associated activation mechanism;
Figure 3 is a top plan perspective view of a housing of the activation mechanism of Figure 1;
Figure 4 is a plan perspective view of a pin forming part of the activation mechanism of Figure 1;
Figure 5 shows a key ring for use in association with the pin and housing of Figures 3 and 4; and
Figure 6 is a perspective view of the housing of Figure 3 as seen from underneath.

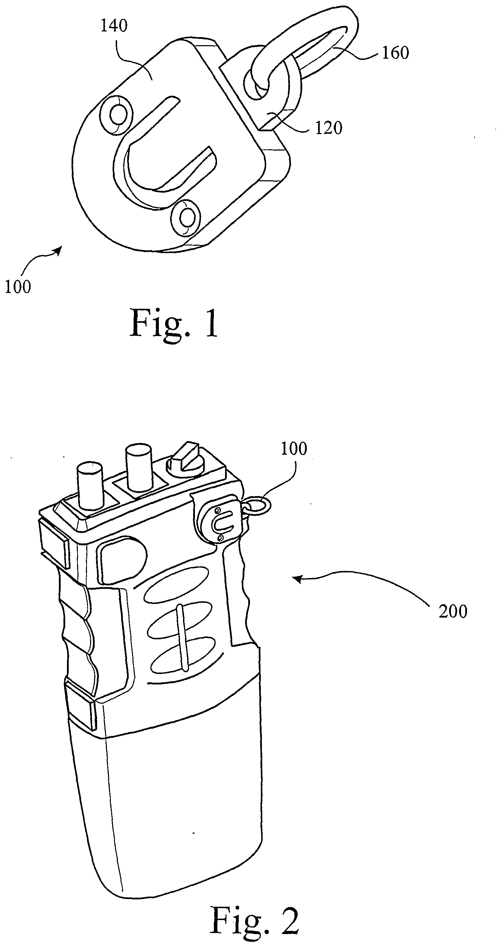

Referring initially to Figure 1, there is shown an activation mechanism for a personal locator beacon. In brief, the activation mechanism comprises a pin 120, hereinafter referred to as pull-pin, a housing 140 and a key ring 160.

Referring to Figure 2, the activation mechanism of Figure 1 is shown associated with a personal locator beacon 200.

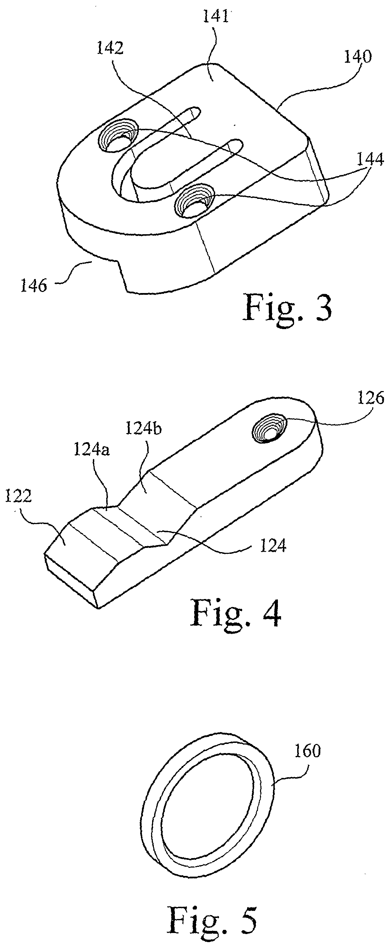

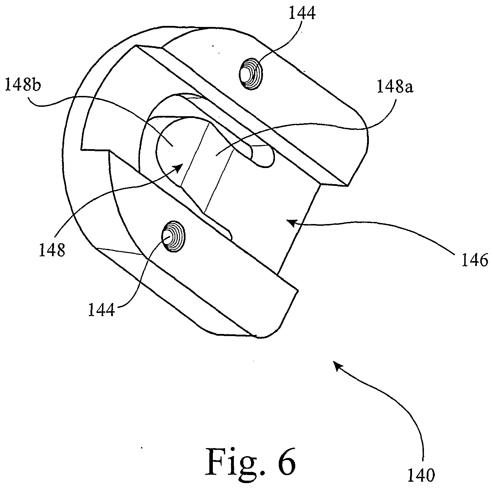

Referring now to Figure 3, the housing 140 comprises a one-piece plastics moulded member including a relatively rigid main housing 141, within which a finger 142 extends centrally. The housing 140 further comprises mounting means 144 for fixedly associating the housing with the locator beacon 200, here, the mounting means are shown as comprising screw holes. Also, the housing 140 includes, as can best be seen from Figure 6, pin insertion region 146 effectively forming a slot into which the pin 120 (to be described hereinafter) is a sliding fit. The finger 142 includes a protruding region 148 comprising a pair of downwardly extending ramps 148a, 148b.

The pull-pin 120 of Figure 4 comprises an elongate member having a smooth bottom surface (not shown) and a shaped top surface including a first ramped region 122 and an indentation 124 formed by co-operating ramped surfaces 124a, 124b. The pull-pin 120 further comprises a through bore 126 which is arranged to cooperate with the key ring 160.

The key ring 160 of Figure 5, whilst being shown as a continuous member, preferably is formed from a loop of material which may be deformed in conventional key ring manner in order to allow it to be threaded into the bore 126 of the pull-pin 120 to assume the configuration shown generally in Figure 1.

Now that the individual parts of the activation mechanism for the personal locator beacon have been described, the cooperation of those elements will be described, and then an example will be given as to how the activation mechanism is arranged to function.

In use, it will be appreciated that the housing 140 of the activation mechanism is arranged to be fixedly attached to the surface of the personal locator beacon shown in Figure 2. This fixed attachment may be accomplished by means of, for instance, screw fixing the housing 140 to the personal locator beacon by means of screws passing through the bores 144 and into a body portion of the beacon 200.

It will be appreciated from Figure 6 that the internal formation of the cover 140 is generally arranged so as to have parallel interior walls for guiding the pull-pin 120 in a linear fashion into the housing 140. The insertion region 146 formed in the housing 140 effectively forms a slot into which the pull-pin 120 may be inserted. This slot is shown as being open at both ends but, it will be appreciated, may be open at one end only to prevent mis-insertion of the pin from the wrong end. Alternatively, to having a closed end of the housing, other means (not shown) may be provided on the housing or the pin or a body portion of the beacon itself to prevent such mis-insertion of the pin into the housing. Such means could comprise suitably arranging the geometry of the pin and housing so as to only enable insertion of the pin from a desired side of the housing. For instance, a shoulder may be provided internally of the housing to prevent the pin from being inserted into the insertion region from the wrong direction.

In order to associate the pull-pin 120 with the housing 140, the pull-pin is slidably inserted into the insertion region 146 of the housing 140. As the pin 120 slides further into the slot, the leading ramped edge 122 of the pin 120 will come into contact with the downwardly extending protrusion 148 formed on the finger 142. The ramp 122 acts so as to deflect the finger outwardly. Thereafter, a point is reached at which the ramp surface 122 has deflected the finger 142 to a maximum extent, after which, the resilient nature of the finger 142 causes the finger to snap back into essentially its original position and the ramped surfaces 148a, 148b of the protrusion 148 of the finger 142 engage with and sit within the indentation formed by the mutually inclined surfaces 124a, 124b of the pull-pin. The mutual cooperation of protrusion and indentation, form a detent mechanism which resists further insertion, or removal, of the pin 120 into/from the housing 140. The degree of resistance to removal of the pull-pin 120 from the housing 140 depends upon the steepness and depth of the corresponding ramps 124a, 124b, 148a, 148b. It will be appreciated that the shallower the angle of inclination of the various ramps with respect to the horizontal plane (i.e. with respect to the smooth under surface of the pin 120), the easier the pin 120 is to remove from the housing 140. In contrast, the steeper the degree of inclination, the more difficulty will be encountered in removing the pull-pin 120. Also effecting the ease of removal of the pin 120 is the relative resiliency (or hardness) of the finger 142.

As can be seen from Figures 1 and 2, when the pull-pin is inserted into the housing 140 and resiliently held within it, the key ring 160 is freely accessible from the side of the personal locator beacon 200.

In use, the key ring 160 may be attached by a lanyard (leash) to a part of the interior of an aircraft in which flying personnel operate. Should ejection of the aircrew be necessary, then the leash will cause force to be put upon the key ring 160 to try and retain the pull-pin 120 within the aircraft. Here, the resistance to removal of the pin 120 from the housing 140 is arranged so as to be high enough to avoid inadvertent removal of the pin 120, but low enough such that the leash attaching the key ring to the aircraft is not unduly strained during an aircrew ejection so that the pull-pin 120 disassociates from the housing 140 without causing the leash to break.

Disassociation of the pull-pin 120 from the housing 140 is arranged so as to activate the personal locator beacon to cause it to start transmitting location signals. This activation may be achieved, for instance, by the bottom sliding surface of the pin 120 allowing a plunger switch upwardly extending from the locator beacon to be released, alternatively, the pull-pin may itself comprise a suitable conductor mechanism which, when removed, causes the breaking or making of a circuit within the personal locator beacon to turn that beacon on. As will be appreciated, the actual switching on of the locator beacon by removal of the pin 120 may be achieved in a variety of ways and the manners of activation just described, are not to be construed as limiting.

The housing 140 can be fixed in a horizontal or vertical aspect providing optional positions for the mounting of the beacon on the pilots flying suit, or some other piece of equipment.

It will be appreciated that numerous variations and modifications to the activation mechanism may be contemplated without departing from the scope of the invention. For instance, while the finger 142 is described as including a protrusion and the pin 120 as including an indentation, this situation may be reversed, i.e. indentation on finger 142, protrusion on pin 120.

## Claims

1. An activation mechanism for a personal locator beacon (200), the beacon being arranged, in use, to be located on a flight suit, the mechanism comprising: a removable actuator pin (100) arranged to be connected by a leash to a fixed point of an aircraft; a pin housing fixably attached to the personal locator beacon for removably associating the pin with the locator beacon and a pin withdrawal mechanism for automatically disassociating the pin from the locator beacon in the event of an emergency ejection of an aircrew member, withdrawal of the pin causing activation of the personal locator beacon.

2. A mechanism as claimed in claim 1 in which the removable pin and the pin housing are arranged to cooperate with one another by means of mutually engaging members.

3. A mechanism as claimed in claim 2 in which the mutually engaging members form a detent mechanism.

4. A mechanism as claimed in claim 3 in which the detent mechanism comprises a protrusion cooperating with an indentation.

5. A mechanism as claimed in claim 4 in which the protrusion and the indentation comprise cooperating parts of the housing and the pin respectively.

6. A mechanism as claimed in any preceding claim arranged such that the housing may be orientated on the personal locator beacon in one of a plurality of positions according to a desired pin entry/exit angle.

7. A mechanism as claimed in claim 6 in which the housing is orientated with respect to the beacon such that the pin may be withdrawn from the housing in a sideways direction.

8. A mechanism as claimed in claim 6 in which the housing is orientated with respect to the beacon such that the pin may be withdrawn at an angle approximately orthogonal to the sideways direction.

9. A mechanism as claimed-in any of claims 6 to 8 in which the variable orientation is provided to account for the variety of possible positions on the flight suit.

10. A mechanism as claimed in any preceding claim in which the pin is slidably engageable with the housing.

11. A mechanism as claimed in claim 3 or any claim dependent upon claim 3 in which the housing comprises a pin insertion region and a pin reception region into which the pin may be slidably introduced and positively locked into position by means of the detent mechanism.

12. A mechanism as claimed in claim 3 or any claim dependent upon claim 3 in which the detent mechanism comprises a flexible finger forming part of the housing and including a protrusion for engaging with the corresponding indentation in the pin.

13. A mechanism as claimed in claim 12 in which insertion of the pin into the insertion region of the housing causes deflection of the finger and further insertion of the pin allows the protrusion on the finger to seat within the indentation of the pin.

14. A mechanism as claimed in claim 13 in which the pin includes a deflection ramp which is inclined with respect to the sliding direction of insertion of the pin whereby insertion of the pin into the insertion region of the housing causes the deflection ramp to connect with the housing finger and cause deflection of the finger.

15. A mechanism as claimed in any preceding claim in which means are provided on the housing or the pin or a body portion of the beacon itself to prevent mis-insertion of the pin into the housing, said means comprising:
suitably arranging the geometry of the pin and the housing so as to only enable insertion of the pin from a desired side of the housing; and
a shoulder provided internally of the housing to prevent the pin from being inserted into insertion region from the wrong direction.

16. A mechanism as claimed in claim 4 or any claim when dependent upon claim 4 in which the indentation of the pin comprises a V-shaped groove whose formation is arranged to correspond closely to the formation of the finger protrusion.

17. A mechanism as claimed in claim 4 or any claim when dependent upon claim 4 in which the pin, once inserted into the housing, cooperation of the indentation and protrusion is arranged to resist removal of the pin from the housing.

18. A mechanism as claimed in claim 4 or any claim when dependent upon claim 4 in which the geometric configuration of the indentation and protrusion is selected according to a desired resistance to withdrawal of the pin.

19. A mechanism as claimed in any preceding claim in which the pin is provided with engagement means for cooperation with the pin withdrawal mechanism.

20. A mechanism as claimed in claim 19 in which the engagement means comprise a through bore formed in an extension of the pin which is arranged to extend beyond an outer periphery of the housing when the pin is received within the housing.

21. A mechanism as claimed in claim 19 or 20 in which the pin withdrawal mechanism comprises a key ring or like mechanism arranged to extend through the bore formed in the pin and to be joined to an external surface.

22. A method of operating an activation mechanism of a personal locator beacon when the activation mechanism is as claimed in any of claims 1 to 21, comprising causing the pin to become withdrawn upon the ejection of an aircrew member.

23. A method of operating an activation mechanism of a personal locator beacon when the activation mechanism is as claimed in claim 18 or any claim dependent upon claim 18 comprising varying resistance to the withdrawal of the pin from the mechanism.

## Patentansprüche

1. Aktivierungsmechanismus für eine Bake (200) eines persönlichen Lokalisierers, wobei die Bake dafür ausgelegt ist, im Gebrauch an einem Fluganzug angeordnet zu werden, wobei der Mechanismus Folgendes umfasst: einen entfernbaren Betätigungsstift (100), der dafür ausgelegt ist, durch eine Leine mit einem festen Punkt eines Flugzeugs verbunden zu werden; ein Stiftgehäuse, das an der Bake des persönlichen Lokalisierers befestigbar angebracht ist, um den Stift der Lokalisiererbake entfernbar zuzuordnen, und einen Stiftzurückziehmechanismus, um den Stift von der Lokalisiererbake im Fall eines Notausstiegs eines Besatzungsmitglieds automatisch zu trennen, wobei das Zurückziehen des Stifts eine Aktivierung der Bake des persönlichen Lokalisierers bewirkt.

2. Mechanismus nach Anspruch 1, wobei der entfernbare Stift und das Stiftgehäuse dafür ausgelegt sind, durch Elemente für gegenseitigen Eingriff zusammenzuwirken.

3. Mechanismus nach Anspruch 2, wobei die Elemente für gegenseitigen Eingriff einen Arretierungsmechanismus bilden.

4. Mechanismus nach Anspruch 3, wobei der Arretierungsmechanismus einen Vorsprung aufweist, der mit einer Vertiefung zusammenwirkt.

5. Mechanismus nach Anspruch 4, wobei der Vorsprung und die Vertiefung zusammenwirkende Teile des Gehäuses bzw. des Stifts umfassen.

6. Mechanismus nach einem vorhergehenden Anspruch, der so beschaffen ist, dass das Gehäuse an der Bake des persönlichen Lokalisierers an einer von mehreren Positionen entsprechend dem Stifteintritts-/Stiftaustrittswinkel orientiert werden kann.

7. Mechanismus nach Anspruch 6, wobei das Gehäuse in Bezug auf die Bake in der Weise orientiert ist, dass der Stift aus dem Gehäuse in seitlicher Richtung herausgezogen werden kann.

8. Mechanismus nach Anspruch 6, wobei das Gehäuse in Bezug auf die Bake in der Weise orientiert ist, dass der Stift unter einem Winkel ungefähr senkrecht zu der seitlichen Richtung herausgezogen werden kann.

9. Mechanismus nach einem der Ansprüche 6 bis 8, wobei die veränderliche Orientierung vorgesehen ist, um die Vielfalt möglicher Positionen an dem Fluganzug zu berücksichtigen.

10. Mechanismus nach einem vorhergehenden Anspruch, wobei der Stift mit dem Gehäuse gleitend in Eingriff gelangen kann.

11. Mechanismus nach Anspruch 3 oder irgendeinem von Anspruch 3 abhängigen Anspruch, wobei das Gehäuse einen Stifteinsetzbereich und eine Stiftaufnahmebereich aufweist, in die der Stift gleitend eingeführt werden kann und mittels des Arretierungsmechanismus an seiner Position sicher verriegelt werden kann.

12. Mechanismus nach Anspruch 3 oder irgendeinem von Anspruch 3 abhängigen Anspruch, wobei der Arretierungsmechanismus einen biegsamen Finger aufweist, der einen Teil des Gehäuses bildet und einen Vorsprung enthält, um mit der entsprechenden Vertiefung in dem Stift in Eingriff zu gelangen.

13. Mechanismus nach Anspruch 12, wobei das Einsetzen des Stifts in den Einsetzbereich des Gehäuses bewirkt, dass sich der Finger biegt, und ein weiteres Einsetzen des Stifts dem Vorsprung an dem Finger ermöglicht, in der Vertiefung des Stifts zu sitzen.

14. Mechanismus nach Anspruch 13, wobei der Stift eine Biegerampe aufweist, die in Bezug auf die Gleitrichtung des Einsetzens des Stifts geneigt ist, wobei das Einsetzen des Stifts in den Einsetzbereich des Gehäuses bewirkt, dass sich die Biegerampe mit dem Gehäusefinger verbindet und ein Biegen des Fingers bewirkt.

15. Mechanismus nach einem vorhergehenden Anspruch, wobei die Mittel auf dem Gehäuse oder dem Stift oder einem Körperteil der Bake selbst vorgesehen sind, um ein falsches Einsetzen des Stifts ins Gehäuse zu verhindern, wobei die Mittel Folgendes umfassen:
das geeignete Auslegen der Geometrie des Stifts und des Gehäuses, um ein Einsetzen des Stifts nur von einer gewünschten Seite des Gehäuses zu ermöglichen; und
eine Schulter, die innerhalb des Gehäuses vorgesehen ist, um zu verhindern, dass der Stift in den Einsetzbereich aus der falschen Richtung eingesetzt wird.

16. Mechanismus nach Anspruch 4 oder irgendeinem Anspruch, wenn abhängig von Anspruch 4, wobei die Vertiefung des Stifts eine V-förmige Nut aufweist, die so geformt ist, dass sie der Form des Fingervorsprungs genau entspricht.

17. Mechanismus nach Anspruch 4 oder irgendeinem Anspruch, wenn abhängig von Anspruch 4, wobei der Stift, sobald er in das Gehäuse eingesetzt ist, durch die Zusammenwirkung der Vertiefung und des Vorsprungs daran gehindert wird, aus dem Gehäuse entfernt zu werden.

18. Mechanismus nach Anspruch 4 oder irgendeinem Anspruch, wenn abhängig von Anspruch 4, wobei die geometrische Konfiguration der Vertiefung und des Vorsprungs entsprechend einem gewünschten Widerstand gegenüber dem Herausziehen des Stifts gewählt ist.

19. Mechanismus nach einem vorhergehenden Anspruch, wobei der Stift mit Eingriffmitteln für die Zusammenwirkung mit dem Stiftherausziehmechanismus versehen ist.

20. Mechanismus nach Anspruch 19, wobei die Eingriffmittel eine Durchgangsbohrung aufweisen, die in einer Verlängerung des Stifts ausgebildet ist, die so beschaffen ist, dass sie sich über einen äußeren Umfang des Gehäuses hinaus erstreckt, wenn der Stift in dem Gehäuse aufgenommen ist.

21. Mechanismus nach Anspruch 19 oder 20, wobei der Stiftherausziehmechanismus einen Keilring oder einen ähnlichen Mechanismus umfasst, der dafür ausgelegt ist, sich durch die in dem Stift gebildete Bohrung zu erstrecken und mit einer äußeren Oberfläche verbunden zu werden.

22. Verfahren zum Betreiben eines Aktivierungsmechanismus einer Bake eines persönlichen Lokalisierers, wenn der Aktivierungsmechanismus wie in einem der Ansprüche 1 bis 21 angegeben beschaffen ist, das umfasst zu veranlassen, dass der Stift bei einem Ausstieg eines Besatzungsmitglieds herausgezogen wird.

23. Verfahren zum Betreiben eines Aktivierungsmechanismus einer Bake eines persönlichen Lokalisierers, wenn der Aktivierungsmechanismus wie in Anspruch 18 oder irgendeinem von Anspruch 18 abhängigen Anspruch beschaffen ist, das umfasst, den Widerstand gegenüber dem Herausziehen des Stifts aus dem Mechanismus zu verändern.

## Revendications

1. Mécanisme d'activation pour une balise individuelle (200) de repérage, la balise étant disposée, en cours d'utilisation, pour être située sur une tenue de vol, le mécanisme comportant : une goupille amovible (100) d'actionnement disposée pour être reliée par une longe à un point fixe d'un aéronef ; un logement de goupille rattaché de façon à pouvoir être fixé à la balise individuelle de repérage pour associer de façon amovible la goupille à la balise de repérage et un mécanisme de retrait de goupille servant à dissocier automatiquement la goupille de la balise de repérage dans l'éventualité d'une éjection d'urgence d'un membre du personnel navigant, le retrait de la goupille provoquant l'activation de la balise individuelle de repérage.

2. Mécanisme selon la revendication 1, la goupille amovible et le logement de goupille étant disposés pour coopérer entre eux au moyen d'éléments en interaction mutuelle.

3. Mécanisme selon la revendication 2, les éléments en interaction mutuelle formant un mécanisme à cran.

4. Mécanisme selon la revendication 3, le mécanisme à cran comportant une protubérance coopérant avec une indentation.

5. Mécanisme selon la revendication 4, la protubérance et l'indentation constituant respectivement des parties en coopération du logement et de la goupille.

6. Mécanisme selon l'une quelconque des revendications précédentes, disposé de telle façon que le logement puisse être orienté sur la balise individuelle de repérage dans une position parmi une pluralité de positions en fonction d'un angle souhaité d'entrée/de sortie de la goupille.

7. Mécanisme selon la revendication 6, le logement étant orienté par rapport à la balise de telle façon que la goupille puisse être retirée du logement dans une direction latérale.

8. Mécanisme selon la revendication 6, le logement étant orienté par rapport à la balise de telle façon que la goupille puisse être retirée suivant un angle approximativement orthogonal à la direction latérale.

9. Mécanisme selon l'une quelconque des revendications 6 à 8, l'orientation variable étant prévue pour prendre en compte la diversité des positions possibles sur la tenue de vol.

10. Mécanisme selon l'une quelconque des revendications précédentes, la goupille pouvant interagir par coulissement avec le logement.

11. Mécanisme selon la revendication 3 ou toute revendication dépendant de la revendication 3, le logement comportant une région d'insertion de goupille et une région de réception de goupille dans laquelle la goupille peut être introduite par coulissement et bloquée positivement en position au moyen du mécanisme à cran.

12. Mécanisme selon la revendication 3 ou toute revendication dépendant de la revendication 3, le mécanisme à cran comportant un doigt souple faisant partie du logement et comprenant une protubérance servant à interagir avec l'indentation correspondante dans la goupille.

13. Mécanisme selon la revendication 12, l'insertion de la goupille dans la région d'insertion du logement provoquant une déformation du doigt et la poursuite de l'insertion de la goupille permettant à la protubérance sur le doigt de se poser à l'intérieur de l'indentation de la goupille.

14. Mécanisme selon la revendication 13, la goupille comprenant une rampe de déformation qui est inclinée par rapport à la direction de coulissement de l'insertion de la goupille, l'insertion de la goupille dans la région d'insertion du logement amenant ainsi la rampe de déformation à entrer en liaison avec le doigt du logement et à provoquer la déformation du doigt.

15. Mécanisme selon l'une quelconque des revendications précédentes, les moyens étant prévus sur le logement ou la goupille ou une portion de corps de la balise elle-même afin d'empêcher une insertion incorrecte de la goupille dans le logement, lesdits moyens consistant à :
agencer de manière appropriée la géométrie de la goupille et du logement de façon à ne permettre l'insertion de la goupille qu'à partir d'un côté souhaité du logement ; et comportant
un épaulement réalisé intérieurement au logement pour empêcher la goupille d'être insérée dans la région insertion à partir de la mauvaise direction.

16. Mécanisme selon la revendication 4 ou toute revendication qui dépend de la revendication 4, l'indentation de la goupille comportant une rainure en forme de V dont la formation est disposée de façon à correspondre de près à la formation de la protubérance du doigt.

17. Mécanisme selon la revendication 4 ou toute revendication qui dépend de la revendication 4, la coopération de l'indentation et de la protubérance étant disposée, une fois la goupille insérée dans le logement, pour s'opposer à l'enlèvement de la goupille du logement.

18. Mécanisme selon la revendication 4 ou toute revendication qui dépend de la revendication 4, la configuration géométrique de l'indentation et de la protubérance étant choisie en fonction d'une résistance souhaitée au retrait de la goupille.

19. Mécanisme selon l'une quelconque des revendications précédentes, la goupille étant munie de moyens d'interaction servant à la coopération avec le mécanisme de retrait de goupille.

20. Mécanisme selon la revendication 19, les moyens d'interaction comportant un alésage débouchant formé dans un prolongement de la goupille, qui est disposé pour s'étendre au-delà d'une périphérie extérieure du logement lorsque la goupille est reçue à l'intérieur du logement.

21. Mécanisme selon la revendication 19 ou 20, le mécanisme de retrait de goupille comportant un anneau à clés ou mécanisme similaire disposé pour s'étendre à travers l'alésage formé dans la goupille et pour être joint à un surface externe.

22. Procédé d'utilisation d'un mécanisme d'activation d'une balise individuelle de repérage lorsque le mécanisme d'activation est conforme à l'une quelconque des revendications 1 à 21, comportant l'étape consistant à faire en sorte que la goupille se trouve retirée suite à l'éjection d'un membre du personnel navigant.

23. Procédé d'utilisation d'un mécanisme d'activation d'une balise individuelle de repérage lorsque le mécanisme d'activation est conforme à la revendication 18 ou à toute revendication dépendant de la revendication 18, comportant l'étape consistant à faire varier la résistance au retrait de la goupille du mécanisme.
